# EUROPÄISCHE PATENTSCHRIFT

(11) **EP 1 148 325 B1**
(45) Veröffentlichungstag und Bekanntmachung des Hinweises auf die Patenterteilung: **30.07.2003**
(21) Anmeldenummer: 01107429.1
(22) Anmeldetag: 27.03.2001
(51) Int. Cl.: G01L 3/10

(54) **Verfahren zur Herstellung eines magnetoelastischen Elements für einen Drehmomentsensor**
Method for producing a magnetostrictive element for a torque sensor
Procédé de fabrication d'un élément magnéto-élastique pour un capteur de couple

(30) Priorität: 20.04.2000 US 553647
(43) Veröffentlichungstag der Anmeldung: 24.10.2001
(73) Patentinhaber: Siemens Aktiengesellschaft, 80333 München (DE)
(72) Erfinder: Kilmartin, Brian D., Cheshire, CT 06410 (US); Gandarillas, Carl, Beacon Falls, CT 06403 (US); Bossoli, Jon W., Cheshire, CT 06410 (US)
(74) Vertreter: Payne, Janice Julia

(56) Entgegenhaltungen:
- US-A- 5 706 572
- US-A- 5 889 215

## Beschreibung

Die Erfindung betrifft im Allgemeinen Drehmomentsensoren, und insbesondere nicht-nachgiebige Drehmomentsensoren, die ein magnetoelastisches Element und ein berührungsfreies Magnetometer zum Erfassen der Änderungen des magnetischen Feldes verwenden, die sich ändernden Drehmomentwerten in einer Drehwelle entsprechen.

Das Erfassen des Drehmoments von sich drehenden Wellen ist bei vielen Anwendungen wünschenswert, wie beispielsweise dem Messen der Lenkradbetätigungskraft bei elektronischen Servolenksystemen, dem Bestimmen des Abtriebsmoments eines Getriebes für elektronisch gesteuertes Schalten, dem Erfassen des Abtriebsmoments von motorgetriebenen Werkzeugen und dergleichen. Drehmomentsensoren werden in vielen Varianten hergestellt und können generell in zwei Kategorien eingeteilt werde: "nachgiebige" und "nicht-nachgiebige". Bei nachgiebigen Drehmomentsensoren wird ein Sensor direkt auf einem elastischen Balkenabschnitt einer drehmomenterzeugenden Welle angebracht, um die mechanische Torsion der Welle zu messen. Bei nachgiebigen Drehmomentsensoren wird die Welle über den vollen Meßbereich oft um bis zu etwa acht Grad tordiert.

Bei einem Beispiel eines nachgiebigen Drehmomentsensors wird ein Dehnmeßstreifen verwendet, um die wahrnehmbare Torsion des elastischen Balkenabschnitts der Welle zu messen. Wenn ein Drehmoment auf den elastischen Balkenabschnitt aufgebracht wird, wird der Dehnmeßstreifen zylindrisch gebogen, wodurch in dem Dehnmeßstreifen eine Widerstandsänderung bewirkt wird. Diese Widerstandsänderung in dem Dehnmeßstreifen zeigt eine Drehmomentänderung an. Aufgrund des drehenden Charakters des Balkenabschnitts, an dem der Dehnmeßstreifen angebracht ist, ist es jedoch nicht praktikabel, an den Dehnmeßstreifen Drähte zur Übertragung von Signalen anzuschließen. Drehmomentsensoren, die einen Dehnmeßstreifen einsetzen, erfordern daher eine drahtlose Übertragungsvorrichtung wie beispielsweise einen Hochfrequenzsender, um Widerstandsänderungen in dem Dehnmeßstreifen zu einem Empfänger zu übertragen, der diese Signale als Drehmomentwerte interpretiert. Alternativ könnte bei einem nachgiebigen Drehmomentsensorsystem eine Schleifringe, Bürsten und Kommutatoren verwendende Signalübertragungsanordnung verwendet werden. Andere nachgiebige Drehmomentsensoren können Drehkodierer oder Potentiometer beinhalten, die an der Welle angebracht sind, um die mechanische Torsion der Welle zu messen, und die mechanische Torsion wird dann in einen Drehmomentwert umgewandelt.

Derartige nachgiebige Drehmomentsensorsysteme weisen jedoch zahlreiche Probleme auf. Weil beispielsweise die Dehnmeßstreifen direkt an dem elastischen Balken angebracht werden, müssen auf der Drehwelle Drehmomentbegrenzer aufgenommen werden, um den Balken und die Dehnmeßstreifen davor zu schützen, über ihren elastischen Bereich hinaus ausgelenkt zu werden. Unglücklicherweise stören derartige Vorsichtsmaßnahmen von Natur aus die Übertragung von Energie durch die Welle und ergeben beispielsweise bei einer Lenkradwelle für den Benutzer ein "weiches Gefühl". Außerdem sind derartige Drehmomentsensoren wegen des direkten Kontakts mit der Welle von begrenzter Zuverlässigkeit und sehr teuer. Drehmomentsensoren, die einen Dehnmeßstreifen einsetzen, bedürfen auch einer häufigen Kalibrierung.

Um diese Probleme zu überwinden, wurden nicht-nachgiebige Drehmomentsensoren entwickelt, bei denen ein Sensor Wellendrehmomentänderungen auf berührungsfreie Weise überwacht, wodurch die Notwendigkeit von Drehmomentbegrenzern entfällt. Normalerweise verwenden derartige Drehmomentsensoren ein magnetoelastisches Element, das in innigem Kontakt an einer Drehwelle angebracht ist, wobei der Drehmomentsensor nach dem Prinzip der inversen Magnetostriktion arbeitet.

Magnetostriktion ist im Stand der Technik wohlbekannt und beschreibt eine strukturelle Eigenschaft von Materie, die als Dimensionsänderungen eines Materials aufgrund eines sich ändernden Magnetfeldes definiert ist. Magnetostriktion wird im wesentlichen dadurch hervorgerufen, daß die Atome, die ein Material bilden, sich umorientieren, um ihre magnetischen Momente zu einem äußeren Magnetfeld auszurichten. Dieser Effekt wird für ein bestimmtes Material durch seine Sättigungsmagnetostriktion quantifiziert, die ein Wert ist, der für ein Material die maximale Änderung pro Längeneinheit beschreibt.

Im Gegensatz hierzu ist inverse Magnetostriktion als Veränderungen der magnetischen Eigenschaften eines Materials in Reaktion auf aufgebrachte mechanische Kräfte definiert. Drehmomentsensoren, die inverse Magnetostriktion einsetzen, arbeiten nach dem Prinzip, daß Spannungen oder Verzerrungen, die durch das Anlegen eines Drehmoments über die Drehwelle auf das magnetoelastische Element übertragen werden, meßbare Änderungen des magnetischen Feldes des magnetoelastischen Elements bewirken. Daher ist die von dem magnetoleastischen Element erzeugte magnetische Feldstärke eine direkte Funktion der Größe des angelegten Drehmoments. Ein Drehmomentsensor, der ein derartiges magnetoelastisches Element verwendet, weist auch ein Magnetometer auf, das die von dem magnetoleastischen Element ausgehende magnetische Feldstärke in ein analoges Spannungssignal umsetzt, wodurch es die Funktion eines Drehmoment-zu-Spannung-Wandlers ausübt.

Bei nicht-nachgiebigen Drehmomentsensoren ist es bekannt, einen Ring aus magnetoelastischem Material an einer Drehwelle unter Verwendung eines Festsitzes, wie beispielsweise einem Preßsitz oder einem Schrumpfsitz, unter Verwendung eines Eingriffsmechanismus, wie beispielsweise zusammenpassenden Keilwellennuten oder Zähnen, unter Verwendung einer Chemikalie, wie beispielsweise einem Klebstoff, unter Verwendung einer thermischen Verbindung, wie beispielsweise thermischem Aufspritzen, oder irgendeinem anderen zum Stand der Technik gehörenden Befestigungsverfahren anzubringen. In der Praxis hat sich bei jedem der obigen Befestigungsverfahren das Befestigen des magnetoelastischen Elements an der Welle als von äußerster Bedeutung herausgestellt. In der Tat haben Defekte in der Grenze zwischen dem magnetoelastischen Element und dem das Drehmoment tragenden Bauteil ein irrtümliches Einkoppeln von Spannungen und Verzerrungen in das magnetische Element zur Folge, die Drehmomentmessungen negativ beeinflussen. Grenzdefekte können Mängel wie beispielsweise Hohlräume, Verunreinigungen und Querscherungen umfassen.

Es ist auch bekannt, das magnetoelastische Element mit den erforderlichen magnetischen Eigenschaften zu versehen, indem in das Element eine in Umfangsrichtung gerichtete Spannung (auch als Umfangsspannungen bekannt) eingebracht wird. Der derzeitige Stand der Technik verwendet Zugspannungen, um Umfangsspannungen zu erzielen. Zugspannungen in dem magnetoelastischen Element bewirken, daß das Material sich dehnt, woraus eine erhöhte Porosität resultieren kann. Die erhöhte Porosität fördert ein Phänomen, das als Korrosionsrißbildung bekannt ist und das in der Ausbreitung von mikroskopischen Rissen in der Struktur besteht. Als Folge von Korrosionsrißbildung kann das Material schließlich seine Zugspannungskomponente verlieren, was eine Verschlechterung seiner magnetischen Eigenschaften bewirkt, möglicherweise sogar einen kompletten Ausfall des Sensors.

Praktische Anforderungen an Drehmomentsensoren beinhalten außerdem Vorgaben für Toleranzgrenzen hinsichtlich der Genauigkeit und Linearität des Spannungsausgangs im gültigen Meßbereich und der Größe der Hysterese, die auch als "Nullpunktverschiebung" bekannt ist, nachdem ein "Fließmoment" oder "Übermoment" an die Welle angelegt wurde. Derartige "Übermoment"-Zustände können zum Beispiel in Lenksystemen bei Bordkantenausweichmanövern vorkommen und bei Getriebeanwendungen während drastischer Drehmomentumkehrungen erfahren werden. Hysterese kann auftreten, weil, nachdem ein Übermoment-Zustand abgeklungen ist, der resultierende Bruch oder das resultierende Gleiten an der Grenzfläche Welle/magnetoelastisches Element eine mechanische Vorspannung in dem magnetoelastischen Element bewirkt. Folglich wird eine entsprechende Vormagnetisierung erzeugt, wodurch zukünftige Drehmomentmessungen negativ beeinflußt werden.

Es gibt mehrere potentielle Ursachen für die Ausbildung der Vormagnetisierung, die die zukünftigen Drehmomentmessungen negativ beeinflußt und eine Nullpunktverschiebung bewirkt. Falls beispielsweise die darunterliegende Welle sich nach dem Anlegen eines großen Drehmoments plastisch verformt, wird die Welle nicht in ihren Ruhezustand zurückkehren und die Messung wird folglich nicht auf Null zurückkehren. Falls alternativ ein großes Drehmoment bewirkt, daß das magnetoelastische Element sich plastisch verformt, aber nicht bewirkt, daß die Welle sich plastisch verformt, dann wird das magnetoelastische Element in die entgegengesetzte Richtung gespannt, wenn das Drehmoment entfernt wurde. Der Sensor wird daher in eine Position hinter Null zurückkehren, und die Nullpunktverschiebung ist in einer solchen Situation negativ. Insgesamt kann eine Nullpunktverschiebung in Drehmomentsensoren als Resultat einer beliebigen Kombination von Faktoren auftreten.

Falls der Bruch der Grenzfläche Welle/magnetoelastisches Element lokalisiert ist, kann die Folge außerdem eine magnetische Inkongruenz sein, die als Streuung bei Drehmomentmessungen hinsichtlich der Winkelstellung der Welle zutage tritt. Obschon ein derartiger Bruch zwischen der Welle und dem magnetoelastischen Element normalerweise kein Problem ist, wenn das magnetoelastische Element thermisch gespritzt ist, tritt bei thermisch gespritzten magnetoelastischen Elementen wegen der verschiedenen Wärmeausdehnungskoeffizienten zwischen der Welle und dem magnetoelastischen Element dennoch Hysterese auf, wie hier noch ausführlicher erklärt werden wird.

Bei Drehmomentsensoren für Lenksäulen von Automobilen ist wird es beispielsweise bevorzugt, daß der Gesamtdrehmomentmeßbereich +/-6 ft-lb beträgt und daß die Anforderung an die Hysterese +/-1,5% des Skalenendwertes nach Anlegen eines Fließmoments von 100 ft-lb ausmacht. Derzeitig verwendete, thermisch gespritzte magnetische Elemente werden jedoch eine Hysterese zeigen, die deutlich über den akzeptablen Grenzen liegt, selbst wenn ein Fließmoment von nur 15 ft-lb angelegt wird.

Es besteht somit ein Bedarf für einen Drehmomentsensor, der eine geringe Hysterese zeigen wird, nachdem ein Fließmoment angelegt wurde. Außerdem besteht Bedarf für ein Verfahren zur Herstellung eines derartigen Drehmomentsensors mit geringer Hysterese.

Andere Bedürfnisse werden durch das weitere Studium der folgenden ausführlichen Beschreibung in Verbindung mit den Zeichnungen offensichtlich werden.

Bei einer Form der Erfindung werden die zuvor genannten Erfordernisse durch einen Drehmomentsensor mit geringer Hysterese und ein Verfahren zur Herstellung eines magnetoelastischen Elements mit geringer Hysterese erfüllt, das den Schritt umfaßt, ein magnetoelastisches Material thermisch auf ein Metallsubstrat aufzuspritzen. Nachdem das magnetoelastische Element fest mit der darunterliegenden Welle verbunden wurde, zieht eine Verminderung des Außendurchmessers der Welle das magnetoelastische Element radial einwärts und bewirkt, daß es ein kleineres Volumen einnimmt. Dieses Verfahren liefert die magnetische Anisotropie, die erforderlich ist, damit der Sensor richtig arbeitet, und ergibt auch eine Verdichtung des magnetoelastischen Elements, die ihm eine Eigenstabilität verleiht. Bei einer bevorzugten Ausführungsform besteht das magnetoelastische Element aus Nickel und das Substrat besteht aus rostfreiem Stahl. Es ist außerdem bevorzugt, daß das Substrat eine Welle und das magnetoelastische Element einen in Umfangsrichtung liegenden Ring umfaßt, der in innigem Kontakt daran angebracht ist.

Es wurden mehrere Verfahren zur Verminderung des Außendurchmessers der Welle konzipiert, um das magnetoelastische Element radial einwärts zu ziehen. Beispielsweise wird vor der Aufbringung des magnetoelastischen Materials der Außendurchmesser einer Hohlwelle elastisch expandiert, indem man eine Kraft auf ihren Innendurchmesser einwirken läßt. Bei bevorzugten Ausführungsformen wird dies erreicht, indem ein expandierender Einsatz verwendet wird, der Hohlraum innerhalb der Welle unter Druck gesetzt wird oder vor der Aufbringung von magnetoelastischem Material eine gesteuerte Wärmeausdehnung der Welle herbeigeführt wird. Bei einer alternativen Ausführungsform kann auch nach der Aufbringung noch ein Verfahrensschritt implementiert werden, um den Wellendurchmesser zu vermindern, wie beispielsweise ein axiales Strekken der Welle, bis sie Fließverhalten zeigt. Bei der vorliegenden Erfindung kann jedes beliebige Verfahren verwendet werden, das eine Verminderung der Welle ergibt, nachdem das magnetoelastisch aktive Material auf der Welle aufgebracht ist.

Diese und andere Merkmale der Erfindung werden nach dem Studium der folgenden ausführlichen Beschreibung der bevorzugten Ausführungsformen der Erfindung in Verbindung mit den beigefügten Zeichnungen offensichtlich.
Figur 1 ist eine Perspektivansicht einer ein Drehmoment erzeugenden Welle mit einem daran angebrachten magnetoelastischen Element;
Figur 2 ist eine Perspektivansicht einer ein Drehmoment erzeugenden Welle mit einem daran angebrachten magnetoelastischen Element; und
Figur 3 ist eine perspektivische Teilansicht eines ein magnetoelastisches Element umgebenden Magnetometers.

Obschon die vorliegende Erfindung in verschiedenen Formen ausgeführt werden kann, sind nur gegenwärtig bevorzugte Ausführungsformen in den Zeichnungen gezeigt und werden hier im folgenden beschrieben, wobei es sich versteht, daß die vorliegende Offenbarung als beispielhafte Darlegung der Erfindung zu betrachten ist und es nicht beabsichtigt ist, die Erfindung auf die speziellen veranschaulichten Ausführungsformen zu beschränken.

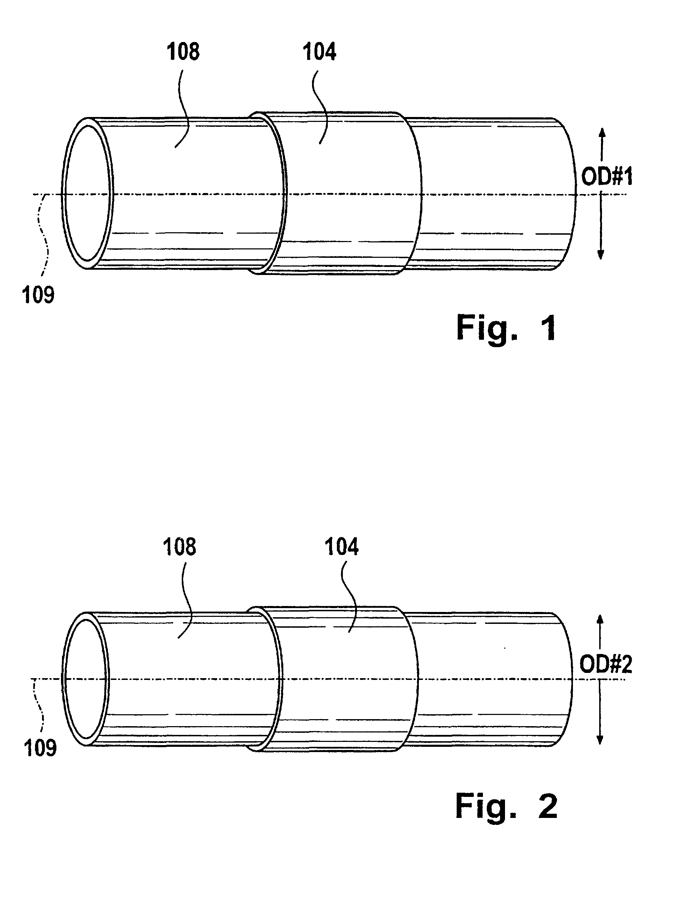

Unter Bezug auf die Figuren 1 - 3 umfaßt ein Drehmomentsensor gemäß einer bevorzugten Ausführungsform der vorliegenden Erfindung allgemein ein magnetoelastisches Element 104 und ein Magnetometer 106. Das magnetoelastische Element 104 ist fest an einer unmagnetischen Welle 108 angebracht, die um eine Längsachse 109 drehbar ist. Die unmagnetische Welle 108 besteht vorzugsweise aus rostfreiem Stahl und besonders bevorzugt aus rostfreiem Nitronic-50-Stahl. Es wird außerdem bevorzugt, daß das magnetoelastische Element 104 aus einem pulverförmigen Metall mit einem zu 99,9% reinen Nickelgehalt besteht, das an der Welle 108 durch ein thermisches Spritzverfahren angebracht wird. Es versteht sich, daß die Welle 108 jedoch aus einem beliebigen anderen unmagnetischen Material wie beispielsweise Aluminium bestehen kann. Außerdem kann das magnetoelastische Element 104 aus einem beliebigen anderen Material bestehen, das einen negativen Magnetostriktionskoeffizienten hat. Es gilt jedoch zu beachten, daß die Polarität der Sättigungsmagnetostriktionskonstante für das magnetoelastische Element 104 festlegt, ob eine Druck- oder Zugspannung erforderlich ist, um die korrekte magnetische Anisotropie in dem Material zu erzeugen, wie weiter unten beschrieben wird. Daher wäre das für einen Ring mit Zugspannung verwendete Material nicht für einen Ring mit Druckspannung geeignet.

Wie oben beschrieben, ist es wesentlich, daß zwischen dem magnetoelastischen Element 104 und der Welle 108 eine innige Bindung ausgebildet wird. Von den oben beschriebenen Anbringungsverfahren wird das thermische Spritzverfahren wegen seiner hohen Bindungsstärke und seiner Eignung für die hohen Volumenanforderungen des Automobilmarktes bevorzugt. Das zur Aufbringung des magnetoelastischen Elements 104 eingesetzte thermische Spritzverfahren verschmilzt das magnetoelastische Element 104 mit der darunterliegenden Welle 108 und erzeugt eine Abstufung an der Substrat/Beschichtungs-Grenzfläche. Die genauen Eigenschaften der Grenze hängen von der Art und der Einstellung der verwendeten Spritzpistole ab. Die Bindung ist typisch mechanisch, da sie entsteht, wenn die Teilchen sich beim Auftreffen selbst in das Substrat einbetten. Schweißen, Plattieren und Dampfabscheidungsverfahren zur Anbringung von Material auf einer Welle werden jeweils eigene Eigenschaften der Grenze ergeben. Jedes dieser Verfahren sorgt für eine innige Bindung zwischen dem magnetoelastischen Element 104 und der darunterliegenden Welle 108, welche in der Lage ist, extreme Drehmomentniveaus zu überstehen, die weit außerhalb des Skalenendwertes eines Meßbereichs liegen. Es ist in der Tat bekannt, daß thermische gespritzte Beschichtungen typische Bindungsstärken in der Größenordnung von 10.000 psi oder größer haben.

Im Rahmen des Standes der Technik ist es bekannt, daß das magnetoelastische Element 104 in seinem Ruhezustand mit einer Spannungsanisotropie vorbelastet werden muß, um den inversen magnetostriktiven Effekt in einem magnetoelastischen Element 104 hervorzurufen. Im Falle eines magnetoelastischen Elements mit Preßsitz wird dies durch das Preßsitzverfahren bewerkstelligt, d. h. in dem magnetoelastischen Element werden Druck- und Zugspannungen ausgebildet, wenn es auf die Welle aufgepaßt wird. im Gegensatz zu dem magnetoelastischen Element mit Preßsitz zieht eine Verminderung des Außendurchmessers der Welle 108, nachdem das magnetoelastische Element 104 aufgebracht ist, das magnetoelastische Element 104 radial einwärts und bewirkt, daß es ein kleineres Volumen einnimmt. Dieses Verfahren sorgt für die magnetische Anisotropie, die erforderlich ist, damit der Sensor korrekt arbeitet, und ergibt auch eine Verdichtung des magnetoelastischen Elements, die ihm eine Eigenstabilität verleiht.

Es stellte sich heraus, daß es die axiale Druckspannungskomponente des magnetoelastischen Nickelelements ist, die zur Hysterese beiträgt. Das thermische Spritzverfahren hinterläßt einen "axialen Magneten" in dem magnetoelastischen Element, der latent vorhanden ist, bis genug Drehmoment angelegt wird, um den "axialen Magneten" aufzumagnetisieren. Wenn daher der Hauptspannungsvektor (in der tangentialen Richtung) mit zunehmender Drehmomentbelastung sich zur axialen Richtung neigt, wird schließlich ein Drehmomentniveau erreicht, das ein permanentes axiales magnetisches Moment bewirkt, wodurch in dem magnetoelastischen Element Hysterese (oder eine "Nullpunktverschiebung") hervorgerufen wird. Der Nettoeffekt hinsichtlich des Sensorausgangssignals besteht darin, daß der Sensor anzeigen wird, daß immer noch ein gewisser Drehmomentbetrag anliegt, obwohl dies nicht so ist. Frühere thermisch gespritzte Drehmomentsensoren konnten in der Tat nur 15 ft-lb aushalten, bevor starke Hysterese auftrat.

Um dieses Problem zu überwinden, beabsichtigt die vorliegende Erfindung, den Außendurchmesser der Welle 108 zu vermindern, nachdem das pulverförmige Nickel thermisch auf die Welle 108 gespritzt wurde. Dies zieht das magnetoelastische Element 104 einwärts, wodurch sich eine Materialverdichtung ergibt, und erhöht die in Umfangsrichtung orientierten Druckspannungen. Dieses Verfahren hat die Wirkung, die axialen Druckspannungen, die von unterschiedlichen thermischen Ausdehnungskoeffizienten zwischen dem gespritzten magnetoelastischen Element 104 und der Welle 108 erzeugt werden, beträchtlich zu vermindern oder zu beseitigen, und verhindert daher im wesentlichen die Hysterese nach dem Anlegen eines Fließmomentes, weil in dem magnetoelastischen Element kein beträchtlicher latenter "axialer Magnet" mehr vorhanden ist.

Es wurden mehrere Verfahren zur Verminderung des Außendurchmessers der Welle 108 konzipiert, um das magnetoelastische Element 104 radial einwärts zu ziehen. Bei einer ersten Ausführungsform wird vor der Aufbringung des magnetoelastischen Materials der Außendurchmesser einer Hohlwelle 108 elastisch expandiert, indem man durch Einsetzen eines expandierenden Einsatzes in die Welle 108 eine Kraft auf ihren Innendurchmesser einwirken läßt. Dieser expandierende Einsatz wird expandiert, um den Durchmesser der Welle 108 zu erhöhen, wie in Figur 1 gezeigt ist, bevor das magnetoelastische Element 104 auf der Welle 108 aufgebracht wird. Nach dem Aufbringen des magnetoelastischen Elements 104 wird dann der expandierende Einsatz kontrahiert und aus der Welle 108 entfernt, und der Durchmesser der Welle kehrt zu seinem Anfangswert zurück, wie in Figur 2 gezeigt ist. Daher ist OD#1 in Figur 1 größer als OD#2 in Figur 2. Nachdem der expandierende Einsatz entfernt wurde, ist der Außendurchmesser der Welle 108 somit vermindert und das magnetoelastische Element 104 wird radial einwärts gezogen, wodurch bewirkt wird, daß es ein kleineres Volumen einnimmt. Dieses Verfahren sorgt für die magnetische Anisotropie, die erforderlich ist, damit der Sensor korrekt arbeitet, und ergibt auch eine Verdichtung des magnetoelastischen Elements 104, die ihm eine Eigenstabilität verleiht.

Bei einer zweiten Ausführungsform wird vor der Aufbringung des magnetoelastischen Materials der Außendurchmesser einer Hohlwelle 108 elastisch expandiert, indem man eine Kraft auf ihren Innendurchmesser einwirken läßt, dadurch daß der Hohlraum innerhalb der Welle 108 unter Druck gesetzt wird. Diese Unterdrucksetzung erhöht den Durchmesser der Welle 108, wie in Figur 1 gezeigt, bevor das magnetoelastische Element 104 auf die Welle 108 aufgebracht wird. Nach dem Aufbringen des magnetoelastischen Elements 104, wird dann der Druck aus dem Hohlraum innerhalb der Welle 108 entfernt und der Durchmesser der Welle 108 kehrt zu seinem Anfangswert zurück, wie in Figur 2 gezeigt ist. Daher ist OD#1 in Figur 1 größer als OD#2 in Figur 2. Nachdem der Druck entfernt wurde, ist der Außendurchmesser der Welle 108 somit vermindert und das magnetoelastische Element 104 wird radial einwärts gezogen, wodurch bewirkt wird, daß es ein kleineres Volumen einnimmt. Dieses Verfahren sorgt für die magnetische Anisotropie, die erforderlich ist, damit der Sensor korrekt arbeitet, und ergibt auch eine Verdichtung des magnetoelastischen Elements 104, die ihm eine Eigenstabilität verleiht.

Bei einer dritten Ausführungsform wird vor der Aufbringung des magnetoelastischen Materials der Außendurchmesser einer Hohlwelle 108 elastisch expandiert, indem eine gesteuerte Wärmeausdehnung der Welle 108 herbeigeführt wird. Diese Wärmeausdehnung erhöht den Durchmesser der Welle 108, wie in Figur 1 gezeigt, bevor das magnetoelastische Element 104 auf die Welle 108 aufgebracht wird. Die axiale thermische Längenzunahme wird während der Wärmeausdehnung beschränkt, um jegliche restlichen axialen Druckspannungen in dem magnetoelastischen Element 104 zu verhindern. Nach der Aufbringung des magnetoelastischen Elements 104 läßt man die Welle 108 abkühlen, wodurch die Wärmeausdehnung beseitigt wird und der Durchmesser der Welle 108 auf seinen Ausgangswert zurückkehrt, wie in Figur 2 gezeigt ist. Daher ist OD#1 in Figur 1 größer als OD#2 in Figur 2. Nachdem die Wärmeausdehnung beseitigt wurde, ist der Außendurchmesser der Welle 108 somit vermindert und das magnetoelastische Element 104 wird radial einwärts gezogen, wodurch bewirkt wird, daß es ein kleineres Volumen einnimmt. Dieses Verfahren sorgt für die magnetische Anisotropie, die erforderlich ist, damit der Sensor korrekt arbeitet, und ergibt auch eine Verdichtung des magnetoelastischen Elements 104, die ihm eine Eigenstabilität verleiht.

Bei einer vierten Ausführungsform wird der Außendurchmesser der Hohlwelle 108 vor der Aufbringung des magnetoelastischen Materials 104 nicht expandiert. Figur 1 zeigt die Welle 108 daher in einem nichtexpandierten Zustand, unmittelbar nachdem das magnetoelastische Element 104 auf die Welle 108 aufgebracht wurde. Nach dem Aufbringen des magnetoelastischen Elements 104, wird dann die Welle 108 axial gestreckt, bis sie Fließverhalten zeigt, wodurch der Außendurchmesser der Welle 108 permanent vermindert wird, wie in Figur 2 gezeigt ist. Daher ist OD#1 in Figur 1 größer als OD#2 in Figur 2. Nachdem die Welle 108 axial gestreckt wurde, bis sie Fließverhalten zeigt, ist der Außendurchmesser der Welle 108 permanent vermindert und das magnetoelastische Element 104 wird radial einwärts gezogen, wodurch bewirkt wird, daß es ein kleineres Volumen einnimmt. Dieses Verfahren sorgt für die magnetische Anisotropie, die erforderlich ist, damit der Sensor korrekt arbeitet, und ergibt auch eine Verdichtung des magnetoelastischen Elements 104, die ihm eine Eigenstabilität verleiht.

Nach der Anwendung der obigen Verfahren verbleibt die Hauptdruckspannung, die für die Sensormessungen genutzt wird, vorteilhafterweise in tangentialer Richtung. Somit wird durch jedes der obigen Verfahren ein magnetoelastisches Element 104 erzeugt, das Hysteresegrade aufweist, die nach dem Anlegen eines Fließmoments weit innerhalb bevorzugter Grenzen liegen, woraus durchweg genaue Drehmomentmessungen resultieren. Obwohl hier thermisches Aufspritzen diskutiert wurde, versteht es sich, daß die vorliegende Erfindung in der Lage ist, bei verschiedenen Verfahren zum Anbringen des magnetoelastischen Elements 104 an der Welle 108 angewandt zu werden, einschließlich Schweißen, Plattieren, physikalischer Dampfabscheidung und chemischer Dampfabscheidung.

Nachdem der magnetoelastische Ring 104 an der Welle 108 angebracht wurde, wird er vorzugsweise an einer (nicht gezeigten) magnetisierenden Einrichtung magnetisiert, die entgegengesetzte Magnetfelder erzeugt. Somit wird eine Hälfte des Rings in Umfangsrichtung im Uhrzeigersinn magnetisiert, während die andere Hälfte in Umfangsrichtung entgegen dem Uhrzeigersinn magnetisiert wird. Diese Magnetisierungstechnik wird verwendet, um für Immunität gegen magnetische Streufelder zu sorgen, die normalerweise das Meßvermögen des Magnetometers 106 stören würden. Es sollte jedoch beachtet werden, daß die vorliegende Erfindung auf einen unidirektional magnetisierten Ring oder eine beliebige Zahl zusammenhängender, gegensätzlich magnetisierter Abschnitte eines magnetoelastischen Rings anwendbar ist.

Es wird nun ein Beispiel des vorgenannten Verfahrens ausführlich beschrieben: das thermische Aufspritzen eines magnetoelastischen Elements aus Nickelpulver der Größe 270/D auf eine Welle aus rostfreiem Stahl. Es gilt zu beachten, daß das folgende spezifische Beispiel dafür vorgesehen ist, weitere Aspekte und besondere Vorteile der vorliegenden Erfindung zu veranschaulichen, und weitere Merkmale und Ausführungsformen sollten für Fachleute offensichtlich sein. Ein 1 Zoll langes Band eines 0,02 Zoll dicken Nickelpulvers wird auf eine Nitronic-50-Welle mit einem Durchmesser von einem Zoll unter Verwendung einer thermischen HVOF-Spritzpistole aufgespritzt. Vor dem Aufbringen des Nickels wird die Welle auf 650 Grad Celsius vorgewärmt, während die axiale thermische Längenzunahme beschränkt wird. Nachdem das Nickelpulver auf die Welle gespritzt wurde, wird die Welle gekühlt. Dieses Beispiel wird nur als Erläuterung angeführt und sollte nicht als Begrenzung des Schutzumfangs der vorliegenden Erfindung verstanden werden.

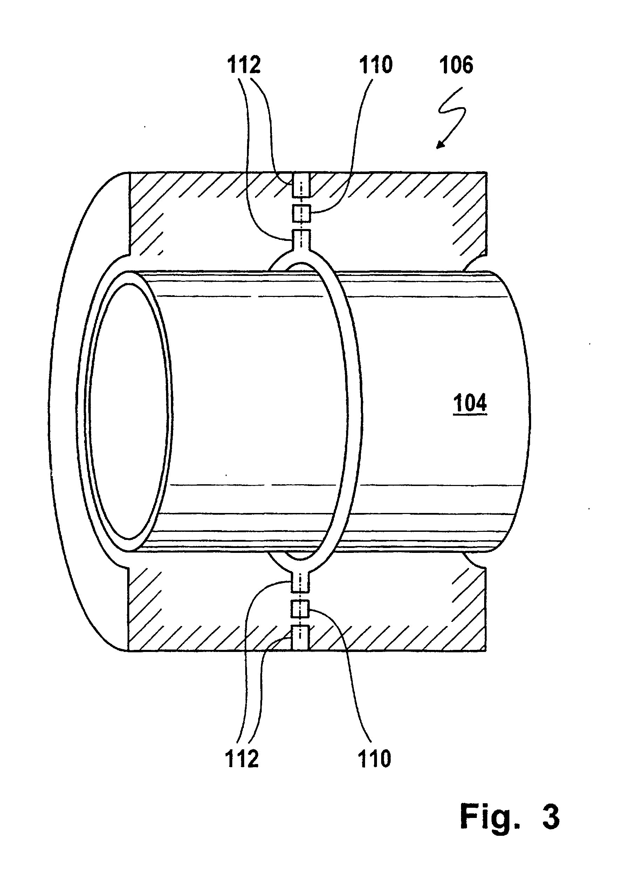

Nachdem der magnetoelastische Ring 104 durch das vorstehende Verfahren an der Welle 108 angebracht und magnetisiert wurde, wird ein ringförmiges Magnetometer berührungsfrei um den magnetoelastischen Ring 104 herum angeordnet, wie in Figur 3 gezeigt, wobei die Hälfte des Gehäuses des Magnetometers 106 entfernt ist. Das Magnetometer 106 hat den Zweck, das von dem magnetoelastischen Ring 104 emittierte magnetische Signal in ein elektrisches Signal zu übersetzen, das von Vorrichtungen der Systemebene gelesen werden kann. Wie oben beschrieben, stehen infolge des inversen magnetostriktiven Effekts des magnetoelastischen Materials die Polarität und die Größe des radial ausgerichteten magnetischen Flusses, der an der Umfangsmittellinie des magnetoelastischen Elements gefunden wird, in direkter Beziehung zum Drehmoment. Das Magnetometer 106 ist vorzugsweise fest an einem (nicht gezeigten) statischen Element nahe der Welle 108 angebracht, wie beispielsweise dem Fahrzeugrahmen eines Automobils im Falle eines Drehmomentsensors, der dazu verwendet wird, das Drehmoment auf einer Antriebswelle, Lenksäule oder dergleichen zu erfassen.

Das in der vorliegenden Erfindung verwendete Magnetometer 106 ist vorzugsweise aus ferromagnetischem Material gebaut, wie beispielsweise Flußstahl, und verwendet vorzugsweise die auch als Sättigungskern-Magnetometrie bekannte Luftspalt-Magnetometrie, welche Fachleuten bekannt ist. Der bevorzugte Magnetometeraufbau ist im wesentlichen in dem US-Patent Nr. 5,889,215 beschrieben.

Luftspalt-Magnetometer arbeiten nach dem Prinzip, daß beim Fehlen eines äußeren Magnetfeldes ein Referenzsignal erstellt werden kann, indem man durch einen Wechselstrom-Induktionsimpuls ein Stück hochpermeables magnetisches Material periodisch in magnetische Sättigung hineinbringt und herausführt. Jede von einer äußeren Quelle wie dem magnetoelastischen Element 104 bewirkte Zeitverschiebung des Referenzsignals kann gemessen und in eine absolute magnetische Feldstärke der äußeren Quelle übersetzt werden.

Obschon viele Luftspalt-Aufbauten getrennte Treiber- und Aufnehmerspulen verwendet haben, wird es für die Zwecke der vorliegenden Erfindung vorgezogen, daß das Magnetometer 106 (Figur 3) nur eine Spule für beide Funktionen enthält, wie es im Stand der Technik bekannt ist. Es wird außerdem bevorzugt, daß das Magnetometer 106 zumindest zwei Treiber-/Aufnehmerspulen 110 enthält, die im folgenden hier als Fluxgates 110 bezeichnet werden.

Um das Leistungsvermögen des Magnetometers zu verbessern, sind in dem Magnetometer 106 Flußführungen 112 vorgesehen und an den Fluxgates 110 angebracht. Die Flußführungen 112 verstärken und fokussieren das von dem magnetoelastischen Element 104 ausstrahlende magnetische Signal vor der Erfassung durch die Fluxgates 110, wodurch das Signal-zu-Rausch-Verhältnis verbessert wird. Die Flußführungen 112 sorgen außerdem für eine zusätzliche Signalaufbereitung, indem sie Ungleichförmigkeiten im magnetischen Signal aus dem magnetoelastischen Element 104 im wesentlichen entfernen. Dies wird dadurch bewerkstelligt, daß die Flußführungen 112 magnetischen Fluß über einen großen angularen Abstand sammeln.

Um die Resistenz des Magnetometers gegenüber in der Umgebung vorhandenen magnetischen Streusignalen, die auch als Gleichtaktstörungen bekannt sind, weiter zu verbessern, werden sowohl in den Entwürfen der elektronischen und magnetischen Schaltungen in dem Magnetometer als auch in dem Aufbau des Magnetometers selbst Gleichtakt-Unterdrückungs-Methoden eingesetzt. Beispielsweise werden, wo immer möglich, im elektronischen Entwurf im Rahmen des Standes der Technik bekannte Differentialschaltungen eingesetzt, um Gleichtaktstörungen aufzuheben. Dieser Effekt wird in dem Magnetometeraufbau durch die Verwendung von symmetrisch gestalteten Flußführungen 112 und symmetrisch plazierten Fluxgates 110 nachgebildet, die vorzugsweise um 180 Grad getrennt sind.

Um die elektrischen und magnetischen Gleichtakt-Unterdrückungs-Strategien zu ergänzen, werden schließlich im Rahmen des Standes der Technik bekannte EMI und magnetische Abschirmungsanordnungen in den Magnetometeraufbau eingebunden. Durch die Verwendung der zuvor genannten Gleichtakt-Unterdrückungs-Methoden und die Abschirmung wird somit im wesentlichen verhindert, daß in der Umgebung aufgefundene magnetische und elektromagnetische Streusignale die Fluxgates 110 und das magnetoelastische Element 104 stören.

Fachleute werden ohne weiteres verstehen, daß der Drehmomentsensor der vorliegenden Erfindung bei verschiedenen Anwendungen eingesetzt werden kann, einschließlich, aber ohne Begrenzung darauf, Messungen der Lenkradbetätigungskraft bei elektronischen Servolenksystemen, dem Ermitteln des Getriebeabtriebsmoments für elektronisch gesteuertes Schalten, Messungen des Nockenwellen- und Kurbelwellendrehmoments zur Erkennung von Motorfehlzündungen, Messungen des Radmoments bei Antiblockierbremssystemen, Messungen der Fahrzeugaufhängung für aktive Straßenlagenkompensation und Bremspedal-Drehmomentmessungen für elektronisches Bremsen.

## Patentansprüche

1. Verfahren zum Ausbilden eines magnetoelastischen Elements zur Verwendung in einem Drehmomentsensor mit folgenden Schritten:
Erhöhen des Außendurchmessers eines länglichen, runden Substrats,
Aufbringen von magnetoelastischem Material auf das Substrat, und
Vermindern des Außendurchmessers des Substrats nachdem das magnetoelastische Material auf das Substrat aufgebracht wurde.

2. Verfahren gemäß Anspruch 1, wobei das Substrat eine Welle ist.

3. Verfahren gemäß Anspruch 2, wobei der Außendurchmesser der Welle erhöht wird, indem ein expandierbarer Einsatz in die Welle eingesetzt wird und der Einsatz expandiert wird, bis der Außendurchmesser vorübergehend erhöht ist.

4. Verfahren gemäß Anspruch 3, wobei der Außendurchmesser der Welle vermindert wird, indem der expandierbare Einsatz kontrahiert wird und der expandierbare Einsatz aus der Welle entfernt wird.

5. Verfahren gemäß Anspruch 2, wobei der Außendurchmesser der Welle erhöht wird, indem ein innerer Hohlraum der Welle unter Druck gesetzt wird, bis der Außendurchmesser vorübergehend erhöht ist.

6. Verfahren gemäß Anspruch 5, wobei der Außendurchmesser der Welle vermindert wird, indem der Druck aus dem inneren Hohlraum entfernt wird.

7. Verfahren gemäß Anspruch 2, wobei der Außendurchmesser der Welle erhöht wird, indem eine gesteuerte Wärmeausdehnung der Welle verwendet wird, bis der Außendurchmesser vorübergehend erhöht ist.

8. Verfahren gemäß Anspruch 7, wobei der Außendurchmesser der Welle vermindert wird, indem die Welle gekühlt wird, um die Wärmeausdehnung von der Welle zu nehmen.

9. Verfahren zum Ausbilden eines magnetoelastischen Elements zur Verwendung in einem Drehmomentsensor mit folgenden Schritten:
Aufbringen von magnetoelastischem Material auf ein längliches, rundes Substrat, und
Vermindern des Außendurchmessers des Substrats nachdem das magnetoelastische Material auf das Substrat aufgebracht wurde.

10. Verfahren gemäß Anspruch 9, wobei das Substrat eine Welle ist.

11. Verfahren gemäß Anspruch 10, wobei der Außendurchmesser der Welle vermindert wird, indem die Welle axial gestreckt wird, bis die Welle Fließverhalten zeigt.

## Claims

1. Method of implementing a magnetostrictive element for use in a torque sensor, comprising the following steps:
increasing the outside diameter of an oblong, round substrate,
applying magnetostrictive material to the substrate, and
reducing the outside diameter of the substrate after the magnetostrictive material has been applied to the substrate.

2. Method according to Claim 1, wherein the substrate is a shaft.

3. Method according to Claim 2, wherein the outside diameter of the shaft is increased by inserting an expandable insert into the shaft and expanding the insert until the outside diameter is temporarily increased.

4. Method according to Claim 3, wherein the outside diameter of the shaft is reduced by contracting the expandable insert and removing the expandable insert from the shaft.

5. Method according to Claim 2, wherein the outside diameter of the shaft is increased by pressurising an internal cavity of the shaft until the outside diameter is temporarily increased.

6. Method according to Claim 5, wherein the outside diameter of the shaft is reduced by removing the pressure from the internal cavity.

7. Method according to Claim 2, wherein the outside diameter of the shaft is increased using controlled thermal expansion of the shaft until the outside diameter is temporarily increased.

8. Method according to Claim 7, wherein the outside diameter of the shaft is reduced by cooling the shaft in order to remove the thermal expansion from the shaft.

9. Method of implementing a magnetostrictive element for use in a torque sensor, comprising the following steps:
applying magnetostrictive material to an oblong, round substrate, and
reducing the outside diameter of the substrate after the magnetostrictive material has been applied to the substrate.

10. Method according to Claim 9, wherein the substrate is a shaft.

11. Method according to Claim 10, wherein the outside diameter of the shaft is reduced by axially elongating the shaft until the shaft exhibits yield behaviour.

## Revendications

1. Procédé pour la fabrication d'un élément magnétoélastique à utiliser dans un capteur de couple avec les étapes suivantes :
augmentation du diamètre extérieur d'un substrat long et rond,
application de matériau magnétoélastique sur le substrat, et
réduction du diamètre extérieur du substrat après que le matériau magnétoélastique ait été appliqué sur le substrat.

2. Procédé selon la revendication 1, le substrat étant un arbre.

3. Procédé selon la revendication 2, le diamètre extérieur de l'arbre étant augmenté par l'insertion d'un insert expansible dans l'arbre et l'expansion de l'insert jusqu'à ce que le diamètre extérieur soit augmenté de manière transitoire.

4. Procédé selon la revendication 3, le diamètre extérieur de l'arbre étant réduit par la contraction de l'insert expansible et le retrait de l'insert expansible de l'arbre.

5. Procédé selon la revendication 2, le diamètre extérieur de l'arbre étant augmenté par la mise sous pression d'une cavité interne de l'arbre jusqu'à ce que le diamètre extérieur soit augmenté de manière transitoire.

6. Procédé selon la revendication 5, le diamètre extérieur de l'arbre étant réduit par l'élimination de la pression de la cavité interne.

7. Procédé selon la revendication 2, le diamètre extérieur de l'arbre étant augmenté par l'utilisation d'une dilatation thermique contrôlée de l'arbre jusqu'à ce que le diamètre extérieur soit augmenté de manière transitoire.

8. Procédé selon la revendication 7, le diamètre extérieur de l'arbre étant réduit par le refroidissement de l'arbre pour supprimer la dilatation thermique de l'arbre.

9. Procédé pour la fabrication d'un élément magnétoélastique à utiliser dans un capteur de couple avec les étapes suivantes :
application de matériau magnétoélastique sur un substrat long et rond, et
réduction du diamètre extérieur du substrat après que le matériau magnétoélastique ait été appliqué sur le substrat.

10. Procédé selon la revendication 9, le substrat étant un arbre.

11. Procédé selon la revendication 10, le diamètre extérieur de l'arbre étant réduit par l'étirement axial de l'arbre jusqu'à ce que l'arbre présente une aptitude au fluage.
